# EUROPEAN PATENT SPECIFICATION

(11) **EP 2 511 250 B1**
(45) Date of publication and mention of the grant of the patent: **14.05.2014**
(21) Application number: 11190917.2
(22) Date of filing: 28.11.2011
(51) Int. Cl.: C04B 35/565, C04B 37/00, C04B 38/00, C04B 41/00, B01D 39/20, F01N 3/022

(54) **Honeycomb structure and method of manufacturing honeycomb structure**
Wabenstruktur und Herstellungsverfahren für Wabenstruktur
Structure en nid d'abeille et procédé de fabrication de la structure en nid d'abeille

(30) Priority: 13.04.2011 WO PCT/JP2011/059211
(43) Date of publication of application: 17.10.2012
(73) Proprietor: Ibiden Co., Ltd., Ogaki-shi Gifu 503-8604 (JP)
(72) Inventor: Koga, Yoshihiro, Gifu, 501-0695 (JP)
(74) Representative: HOFFMANN EITLE

(56) References cited:
- EP-A1- 1 634 859
- EP-A1- 1 832 565
- EP-A1- 1 982 766
- JP-A- 7 080 226
- JP-A- 2004 167 482
- US-A1- 2003 057 581
- US-A1- 2007 028 575

## Description

### BACKGROUND OF THE INVENTION

### 1. Field of the Invention

The present invention relates to a honeycomb structure that treats exhaust gas and a method of manufacturing a honeycomb structure.

### 2. Description of the Related Art

A large number of techniques have been developed in relation to conversion of exhaust gas of automobiles or the like. With an increase in traffic, however, countermeasures taken against exhaust gas have hardly been satisfactory. Not only in Japan but also globally, is emission control of automobiles or the like going to be further tightened.

In order to meet such control of exhaust gas, catalyst supports capable of treating predetermined toxic components contained in exhaust gas are used in exhaust gas converting systems. Further, a honeycomb structure is known as a member for such catalyst supports.

This honeycomb structure has, for example, multiple cells (through holes) extending from one end face to another end face of the honeycomb structure along its longitudinal directions, and these cells are separated from each other by cell walls on which a catalyst is supported. Accordingly, in the case of causing exhaust gas to flow through such a honeycomb structure, substances contained in the exhaust gas, such as HC (a hydrocarbon compound), CO (carbon monoxide), and NOx (nitrogen oxides), are converted (oxidized or reduced) by the catalyst supported on the cell walls, so that these toxic components in the exhaust gas may be treated.

In general, the cell walls (base material) of such a honeycomb structure are formed of cordierite. Further, a catalyst support layer of γ-alumina is formed on the cell walls, and a noble metal catalyst such as platinum and/or rhodium is supported on this catalyst support layer.

Further, a technique has been proposed that, in order to improve conversion performance at exhaust gas temperatures lower than a temperature at which a catalyst becomes active, uses a honeycomb structure of a relatively low electrical resistance, provides this honeycomb structure with electrodes for applying voltage, and supplies the honeycomb structure with electric current, thereby causing the honeycomb structure to perform self-heating (Patent Document 1).

For example, Patent Document 1 discloses that by adding silicon carbide particles and particles of a compound containing nitride to raw material in manufacturing a silicon-carbide-based honeycomb structure, it is possible to reduce the electrical resistivity of a honeycomb structure to be finally obtained.

### [Prior Art Document]

### [Patent Document]

[Patent Document 1] Japanese Laid-Open Patent Application No. 7-80226

According to the conventional honeycomb structure described in Patent Document 1, the finally obtained honeycomb structure can be reduced in electrical resistivity. Therefore, by supplying the honeycomb structure with electric current via a pair of electrodes, it is possible to subject the honeycomb structure to resistance heating.

In general, however, the electrical resistivity of a resistor is a function of temperature and tends to change with an increase in temperature. Accordingly, in the conventional honeycomb structure described in Patent Document 1 as well, the electrical resistivity is believed to change with temperature and, in particular, to decrease sharply with an increase in temperature.

On the other hand, in the case of using a honeycomb structure as an exhaust gas converting apparatus, the temperature of the honeycomb structure varies in a wide range from room temperature (for example, 25 °C) to approximately 500 °C. Accordingly, even if the honeycomb structure has an electrical resistivity in an appropriate range in a certain temperature region, a change in the temperature of the honeycomb structure causes a change in the electrical resistivity, so that the electrical resistivity goes out of the appropriate range. Specifically, if a honeycomb structure has an electrical resistivity in an appropriate range in a certain temperature region, an increase in the temperature of the honeycomb structure causes a decrease in the electrical resistivity. As a result, the electrical resistivity goes out of the appropriate range, thus causing a problem in that it is difficult to properly heat the honeycomb structure.

### SUMMARY OF THE INVENTION

The present invention has been made in view of such a problem, and has an object of providing a honeycomb structure in which the temperature change dependence of electrical resistivity is controlled. Further, the present invention has an object of providing a method of manufacturing such a honeycomb structure.

According to the present invention, a honeycomb structure is provided that includes a pillar-shaped honeycomb unit having a plurality of cells defined by cell walls, wherein the cell walls contain silicon carbide particles, and a nitrogen-containing layer having a thickness in a range of 100 nm to 600 nm is formed on surfaces of the silicon carbide particles, and wherein, the honeycomb unit is obtained by: preparing raw material paste having silicon carbide as a principal component; mixing and kneading the raw material paste; and forming a honeycomb molded body having the plurality of cells by molding the mixed and kneaded raw material paste by extrusion molding; obtaining a honeycomb fired body by firing the honeycomb molded body for 1 hour to 5 hours at 2000°C to 2200°C in an inert atmosphere containing no nitrogen; and heating the honeycomb fired body for 2 hours to 8 hours at a temperature in a range of 1800°C to 2200°C in an environment containing nitrogen.

Here, in the honeycomb structure according to the present invention, a silica layer may be formed on a surface of the nitrogen-containing layer.

Further, in the honeycomb structure according to the present invention, the silica layer may have a thickness in a range of 100 nm to 800 nm.

Further, in the honeycomb structure according to the present invention, a catalyst may be supported on the cell walls.

Further, in the honeycomb structure according to the present invention, the catalyst may be one of platinum, rhodium, and palladium, and the catalyst may be supported on the cell walls by interposing an alumina layer.

Further, the honeycomb structure according to the present invention may have a plurality of the honeycomb units joined by interposing an adhesive layer.

In addition, according to the present invention, a method of manufacturing a honeycomb structure is provided that includes the steps of (a) preparing raw material paste containing silicon carbide particles; (b) forming a honeycomb molded body having a plurality of cells by mixing and kneading the raw material paste and molding the mixed and kneaded raw material paste by extrusion molding; (c) obtaining a pillar-shaped honeycomb unit having the plurality of cells defined by cell walls by firing the honeycomb molded body for 1 hour to 5 hours at 2000°C to 2200°C in an inert atmosphere containing no nitrogen; and (d) forming a nitrogen-containing layer having a thickness in a range of 100 nm to 600 nm on surfaces of the silicon carbide particles forming the cell walls by heating the honeycomb unit for 2 hours to 8 hours at a temperature in a range of 1800°C to 2200°C in an environment containing nitrogen.

In addition, the method of manufacturing a honeycomb structure according to the present invention may further include the step of (e) forming a silica layer on a surface of the nitrogen-containing layer after step (d).

In this case, step (e) may include subjecting the honeycomb unit to heat treatment at a temperature of 1000°C to 1400°C in an atmosphere containing oxygen after coating the surface of the nitrogen-containing layer with silicon.

Further, the silica layer may have a thickness in a range of 100 nm to 800 nm.

In addition, the method of manufacturing a honeycomb structure according to the present invention may further include the step of (f) causing a catalyst to be supported on the cell walls after step (d).

Alternatively, the method of manufacturing a honeycomb structure according to the present invention may further include the step of (f) causing a catalyst to be supported on the cell walls after steps (d) and (e).

In addition, the method of manufacturing a honeycomb structure according to the present invention may further include the step of joining a plurality of the honeycomb units by interposing an adhesive layer.

According to the present invention, it is possible to provide a honeycomb structure in which the temperature change dependence of electrical resistivity is controlled. Further, it is possible to provide a method of manufacturing such a honeycomb structure.

### BRIEF DESCRIPTION OF THE DRAWINGS

FIG. 1 is a schematic perspective view of a honeycomb structure of the present invention.
FIGS. 2A and 2B are graphs schematically illustrating energy levels of silicon carbide and nitrogen, where FIG. 2A illustrates the general energy levels of silicon carbide molecules and nitrogen atoms in the case where the concentration of nitrogen atoms is low and FIG. 2B illustrates the general energy levels of silicon carbide molecules and nitrogen atoms in the case where the concentration of nitrogen atoms is high.
FIG. 3 is a schematic perspective view of another honeycomb structure according to the present invention.
FIG. 4 is a schematic perspective view of a honeycomb unit that is a component of the honeycomb structure of FIG. 3.
FIG. 5 is a flowchart schematically illustrating a method of manufacturing a honeycomb structure of the present invention.
FIG. 6 is a result (photograph) of an SNDM observation of a honeycomb unit according to Example 1.
FIG. 7 is a chart illustrating the result of a line analysis of a partial surface of a silicon carbide particle in the honeycomb unit according to Example 1.
FIG. 8 is a graph illustrating changes in electrical resistivity due to temperature in the honeycomb unit according to Example 1 and a honeycomb unit according to Comparative Example 1.
FIG. 9 is a graph illustrating changes in electrical resistivity over time at 1000 °C in the atmosphere in the honeycomb unit according to Example 1 and a honeycomb unit according to Example 2.

### DETAILED DESCRIPTION OF THE PREFERRED EMBODIMENTS

A description is given below, with reference to the drawings, of the present invention.

### [First Configuration]

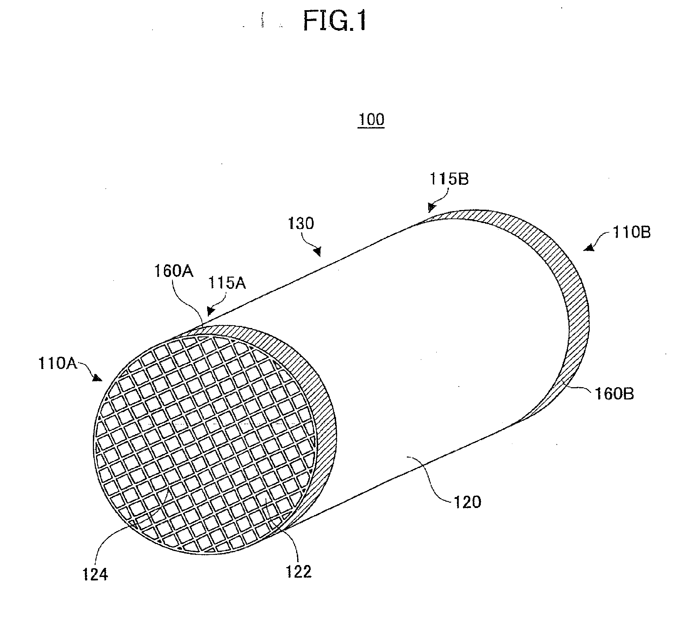

FIG. 1 schematically illustrates a honeycomb structure 100 according to the present invention.

As illustrated in FIG. 1, the honeycomb structure 100 of the present invention includes a single honeycomb unit 130 defined by two open end faces 110A and 110B and a side surface 120.

The honeycomb unit 130 includes multiple cells (through holes) 122 and cell walls 124 defining the cells 122. The cells 122 extend from the end face 110A to the end face 110B along the longitudinal directions of the honeycomb unit 130 to be open at the end faces 110A and 110B.

The honeycomb unit 130 is formed of, for example, a material having silicon carbide (SiC) as a principal component. The honeycomb unit 130 contains a resistance adjusting component in order to reduce electrical resistivity. The resistance adjusting component is nitrogen atoms (N) with which the silicon carbide is doped. That is, the cell walls 124 of the honeycomb unit 130 contains silicon carbide, and a nitrogen-containing layer is formed on the surface of the silicon carbide. A catalyst is supported on the cell walls 124 of the honeycomb unit 130.

Further, in the case of FIG. 1, the honeycomb structure 100 includes a pair of electrodes 160A and 160B.

The first electrode 160A is provided entirely around a first end part 115A of the honeycomb unit 130. The second electrode 160B is provided entirely around a second end part 115B of the honeycomb unit 130. However, the positions where these electrodes 160A and 160B are provided are examples, and the electrodes 160A and 160B may be provided at other positions in the honeycomb structure 100.

The honeycomb structure 100 may be subjected to resistance heating by externally applying voltage between the electrodes 160A and 160B in the honeycomb structure 100 thus configured.

Here, for example, in the conventional honeycomb structure of a resistance heating type described in Patent Document 1, a compound having a low specific resistance value is added to raw material containing silicon carbide particles in order to reduce the electrical resistivity of the honeycomb structure. In this case, a component (low resistance component) contained in the added compound is evenly diffused in the silicon carbide particles during the firing of the raw material, so that it is possible to dispose the low resistance component throughout cell walls in a honeycomb unit to be finally obtained. This makes it possible to reduce the electrical resistivity of the honeycomb unit.

In general, however, the electrical resistivity of a resistor is a function of temperature and tends to change with an increase in temperature. Accordingly, in the conventional honeycomb structure described in Patent Document 1 as well, the electrical resistivity is believed to change with temperature and, in particular, to decrease sharply with an increase in temperature.

On the other hand, in the case of using a honeycomb structure as an exhaust gas converting apparatus, the temperature of the honeycomb structure varies in a wide range from room temperature (for example, 25 °C) to approximately 500 °C. Accordingly, even if the honeycomb structure has an electrical resistivity in an appropriate range in a certain temperature region, a change in the temperature of the honeycomb structure causes a change in the electrical resistivity, so that the electrical resistivity goes out of the appropriate range. Specifically, if a honeycomb structure has an electrical resistivity in an appropriate range in a certain temperature region, an increase in the temperature of the honeycomb structure causes a decrease in the electrical resistivity. As a result, the electrical resistivity goes out of the appropriate range, thus causing a problem in that it is difficult to properly heat the honeycomb structure.

On the other hand, in the honeycomb structure 100 according to the present invention, a layer containing nitrogen atoms (hereinafter referred to as "nitrogen-containing layer") is present on the surfaces of silicon carbide particles that form the cell walls 124. That is, according to the present invention, nitrogen atoms that contribute to the electrical resistivity of a honeycomb unit are present in a concentrated state on the surfaces of silicon carbide particles, so that inside the silicon carbide particles, the nitrogen atoms are absent or present at a lower concentration than on the surfaces of the silicon carbide particles.

By thus disposing nitrogen atoms in a concentrated state on the surfaces of silicon carbide particles, it is possible to control the temperature dependence of the electrical resistivity of a honeycomb unit.

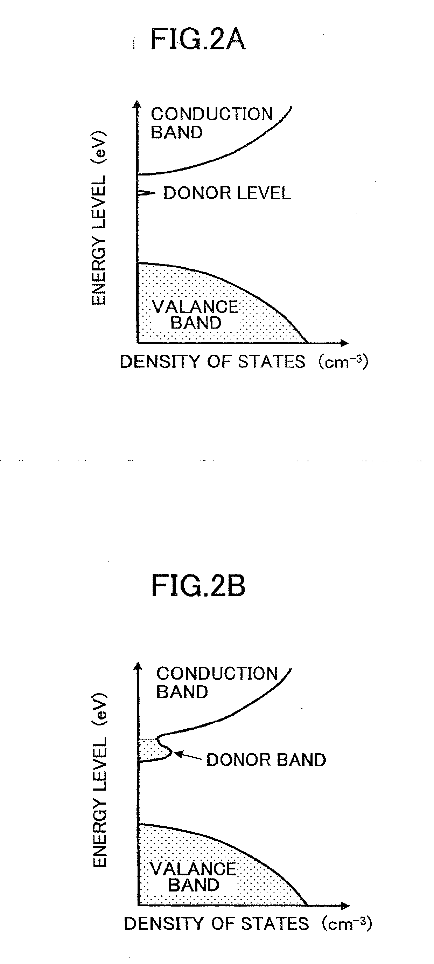

FIGS. 2A and 2B are graphs for illustrating a principle considered to be the reason why the temperature dependence of the electrical resistivity of a honeycomb unit is controlled in the present invention.

FIG. 2A illustrates the general energy levels of silicon carbide molecules and nitrogen atoms in the case where the concentration of nitrogen atoms is low. FIG. 2B illustrates the general energy levels of silicon carbide molecules and nitrogen atoms in the case where the concentration of nitrogen atoms is high.

In FIGS. 2A and 2B, the density of states (cm⁻³) represents the density of electrons or holes present at a certain energy level, the valence band represents an energy band filled with valence electrons, and the conduction band represents an energy band where there are electrons that can move freely as carriers.

As illustrated in FIG. 2A, in the case where the concentration of nitrogen atoms is low, the donor level of nitrogen atoms (approximately 0.05 eV) is believed to be present between the valence band of silicon carbide molecules and the conduction band. In this case, in order for the electrons of nitrogen atoms at the donor level to be excited to the conduction band, corresponding activation energy is required. Usually, this activation energy is a function of temperature. Therefore, the behavior of excitation of electrons to the conduction band presents significant temperature dependence. Therefore, in a honeycomb unit where nitrogen atoms of a small amount are evenly distributed, the electrical resistivity is caused to have conspicuous temperature dependence.

On the other hand, in the case where the concentration of nitrogen atoms is high, a donor band is formed instead of the donor level. Further, as illustrated in FIG. 2B, this donor band overlaps the conduction band of silicon carbide molecules. Accordingly, in this case, the excitation energy for excitation from the donor band to the conduction band is sufficiently reduced, so that the temperature dependence of the activation energy is reduced.

The donor level represents the energy level of electrons present in a band gap, and the donor band represents a group of electron orbits formed by the density of a large number of electrons present at the donor level in the band gap.

According to the present invention, a "nitrogen-containing layer" is present on the surfaces of silicon carbide particles, that is, nitrogen atoms are concentrated on the surfaces of silicon carbide particles. It is believed that this causes the energy state of nitrogen to be as illustrated in FIG. 2B so that the temperature dependence of the electrical resistivity of a honeycomb unit is controlled.

This principle has been thought out by the inventor of the present invention based on the present knowledge, and it is to be noted that the temperature dependence of the electrical resistivity of a honeycomb unit may also be controlled for other reasons in a configuration of the present invention.

Further, the presence of such a nitrogen-containing layer may be determined by scanning nonlinear dielectric microscopy (SNDM).

SNDM, which is one of the measurement methods based on scanning probe microscopy (SPM), is a technique that measures a change in polarity and a concentration distribution of carriers on the surface of a sample based on the charge sign of a probe and the magnitude of an electric field caused upon application of voltage to the probe brought close to the surface of the sample. SNDM is used in, for example, the measurement of a concentration distribution of semiconductor carriers, etc.

Here, according to the present invention, the thickness of the nitrogen-containing layer is in the range of 100 nm to 600 nm, preferably in the range of 200 nm to 600 nm, and more preferably, in the range of 200 nm to 400 nm.

If the thickness of the nitrogen-containing layer is less than 100 nm, the electrical resistivity of a honeycomb unit is not sufficiently reduced. As a result, the amount of electric conduction between electrodes is reduced, so that the honeycomb unit is prevented from being heated to an appropriate temperature. On the other hand, if the thickness of the nitrogen-containing layer exceeds 600 nm, the electrical resistivity of a honeycomb unit is caused to have temperature dependence, so that the electrical resistivity of the honeycomb unit decreases at the time of high temperatures in particular. Therefore, the honeycomb unit is prevented from being heated to an appropriate temperature.

The nitrogen-containing layer is oxidized by long-term use at high temperatures. Progress in the oxidation of the nitrogen-containing layer impairs the control effect of the nitrogen-containing layer on the temperature dependence of electrical resistivity.

In order to address this problem, it is preferable to provide a silica layer as a protection layer on the surface of the nitrogen-containing layer. This silica layer improves the long-term stability of the nitrogen-containing layer and makes it possible to maintain the control effect on the temperature dependence of electrical resistivity over a long period of time.

The thickness of the silica layer is, for example, in the range of 100 nm to 800 nm, preferably in the range of 100 nm to 500 nm, and more preferably, in the range of 200 nm to 500 nm.

If the thickness of the silica layer is less than 100 nm, it is difficult to sufficiently prevent oxidation of the nitrogen-containing layer, so that the oxidation of the nitrogen-containing layer progresses. On the other hand, if the thickness of the silica layer exceeds 800 nm, a stress due to a difference in the coefficient of thermal expansion between the silica layer and the silicon carbide particles increases, so that the silica layer peels off the silicon carbide particles. As a result, the temperature dependence of electrical resistivity is less likely to be controlled.

It is possible to form such a silica layer easily by, for example, adding metal Si (silicon) particles to the surfaces of the silicon carbide particles of the cell walls of a honeycomb unit and thereafter oxidizing the metal Si (silicon) by heating the honeycomb unit.

### [Second Configuration]

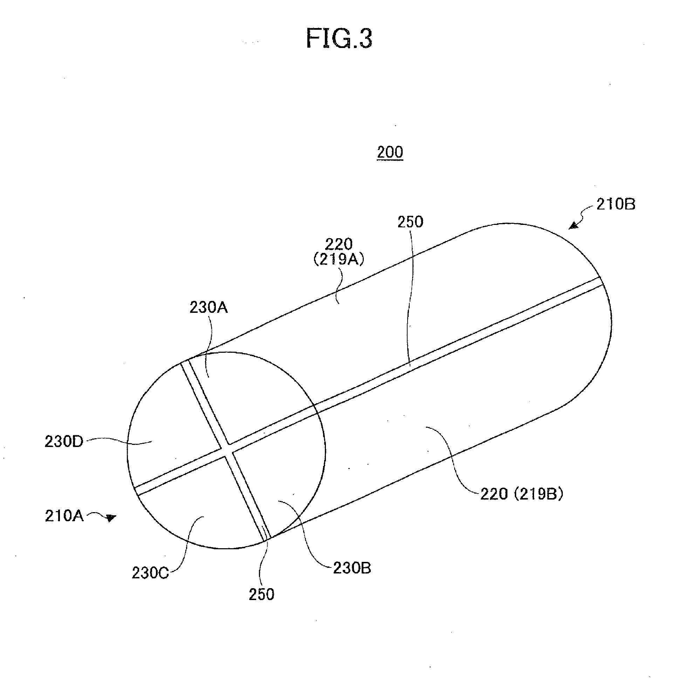

FIG. 3 is a schematic perspective view of another honeycomb structure according to the present invention.

The honeycomb structure 100 illustrated in FIG. 1 is a so-called "monolithic structure" type formed of a single honeycomb unit. The present invention, however, may also be applied to a honeycomb structure having a so-called "aggregated structure" formed of multiple honeycomb units.

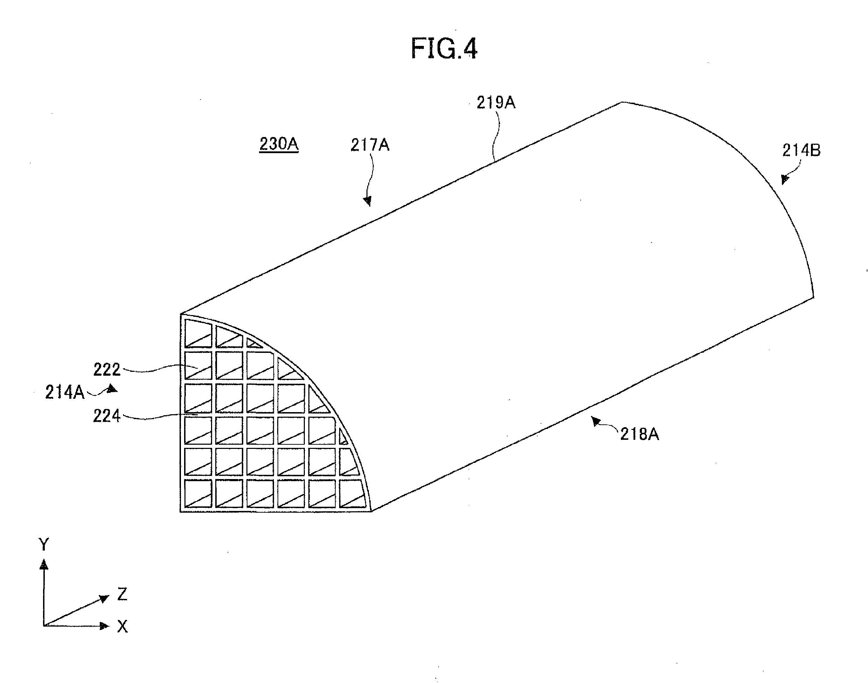

FIG. 3 illustrates a honeycomb structure 200 of the "aggregated structure" according to the present invention. Further, FIG. 4 illustrates a typical honeycomb unit that is a component of the honeycomb structure 200 illustrated in FIG. 3.

As illustrated in FIG. 3, the honeycomb structure 200 of the present invention has two open end faces 210A and 210B and a side surface 220.

The honeycomb structure 200 is formed by joining multiple honeycomb units by interposing an adhesive layer 250. For example, in the case illustrated in FIG. 3, the honeycomb structure 200 includes four honeycomb units 230A through 230D. The honeycomb units 230A through 230D are formed of a material having silicon carbide (SiC) as a principal component.

However, the honeycomb units 230A through 230D contain a resistance adjusting component in order to reduce electrical resistivity. The resistance adjusting component is nitrogen atoms (N) with which the silicon carbide is doped.

As illustrated in FIG. 4, the honeycomb unit 230A has a pillar structure having end faces 214A and 214B having a sectorial shape of a quarter circle and three sides 217A, 218A, and 219A. Of these, the side 217A and the side 218A have a flat surface, and the side 219A is a side having a curved surface (hereinafter referred to as "curved side").

In the case of FIG. 3, the honeycomb units 230B through 230D have the same shape as the honeycomb unit 230A. For example, as illustrated in FIG. 3, the honeycomb unit 230B has a curved side 219B corresponding to the curved side 219A of the honeycomb unit 230A.

The honeycomb unit 230A includes multiple cells 222 and cell walls 224 defining the cells 222. The cells 222 extend from the end face 214A to the end face 214B along the longitudinal directions of the honeycomb unit 230A to be open at the end faces 214A and 214B. A catalyst is supported on the cell walls 224 of the honeycomb unit 230A.

As described above, the cell walls 224 of the honeycomb unit 230A are formed of silicon carbide particles, and a nitrogen-containing layer is formed on the surfaces of the silicon carbide particles. A silica layer may be formed on the surface of the nitrogen-containing layer.

It is clear to a person having ordinary skill in the art that the above-described effects according to the present invention are also produced by the honeycomb structure 200 including this honeycomb unit 230A.

A pair of electrodes is not illustrated in the honeycomb structure 200 illustrated in FIG. 3. However, it is clear to a person having ordinary skill in the art that the honeycomb structure 200 may have a pair of electrodes the same as in the case of FIG. 1. In this case, for example, the electrodes are provided one on each end portion of each of the curved sides (of which the curved sides 219A and 219B are illustrated in FIG. 3) of the honeycomb units 230A through 230D of the honeycomb structure 200.

### [Details of Honeycomb Structure]

Next, a description is given in more detail of a configuration of each of members of a honeycomb structure according to the present invention. In the following, a description is given principally of members of the honeycomb structure 200 having the aggregated structure illustrated in FIG. 3. However, it is clear to a person having ordinary skill in the art that part of this description may also be applied to the honeycomb structure 100 having the monolithic structure illustrated in FIG. 1. Further, in FIG. 3, the conductive honeycomb units 230A through 230D have the same configuration. Accordingly, the conductive honeycomb unit 230A is taken here, and a description is given of its configuration.

### [Honeycomb Unit]

The honeycomb unit 230A is formed of an inorganic material based on silicon carbide (SiC), and contains, as a resistance adjusting component, nitrogen atoms (N) with which the silicon carbide (SiC) is doped.

The cross-sectional shape of the honeycomb unit 230A perpendicular to its longitudinal directions is not limited in particular, and may be any shape such as a square shape, a rectangular shape, a hexagonal shape or the like.

Further, the cross-sectional shape of the cells 222 of the honeycomb unit 230A perpendicular to its longitudinal directions is not limited in particular, and may be, for example, a triangular shape, a polygonal shape or the like in addition to a square shape.

The cell density of the honeycomb unit 230A is preferably 15.5 cells/cm² to 186 cells/cm² (100 cpsi to 1200 cpsi), more preferably 31 cells/cm² to 155 cells/cm² (200 cpsi to 1000 cpsi), and still more preferably 46.5 cells/cm² to 124 cells/cm² (300 cpsi to 800 cpsi).

If the cell density of the honeycomb unit 230A is less than 15.5 cells/cm², the cell walls 224 have a reduced area of contact with exhaust gas, so that sufficient conversion performance is prevented from being obtained. On the other hand, if the cell density of the honeycomb unit 230A exceeds 186 cells/cm², the pressure of a honeycomb structure increases.

The porosity of the honeycomb unit 230A may be in the range of 15% to 50%.

If the porosity of the honeycomb unit 230A is less than 15%, the elastic modulus of the honeycomb unit 230A increases, so that the honeycomb unit 230A is likely to be broken because of a stress generated at the time of its energization. On the other hand, if the porosity of the honeycomb unit 230A exceeds 50%, the strength of the cell walls 224 of the honeycomb unit 230A is reduced.

The thickness of the cell walls 224 of the honeycomb unit 230A is not limited in particular. However, a desirable lower limit is 0.05 mm in terms of strength, and a desirable upper limit is 0.3 mm in terms of conversion performance.

The catalyst supported on the cell walls 224 of the honeycomb unit 230A is not limited in particular, and may be, for example, platinum, rhodium, palladium or the like. The catalyst may be supported on the cell walls 224 by interposing an aluminum layer.

### [Adhesive Layer]

The adhesive layer 250 of the honeycomb structure 200 is formed using adhesive layer paste as raw material. The adhesive layer paste may contain inorganic particles, an inorganic binder, inorganic fibers, and/or an organic binder.

Silicon carbide (SiC) is desirable as inorganic particles of the adhesive layer paste. Inorganic sol, a clay-based binder or the like may be used as the inorganic binder. Examples of the inorganic sol include alumina sol, silica sol, titania sol, water glass and the like. Examples of the clay-based binder include clay, kaolin, montmonrillonite, sepiolite, attapulgite and the like. These may be used alone or in combination. Alumina, silica, silicon carbide, silica-alumina, glass, potassium titanate, aluminum borate or the like is preferable as the material of the inorganic fibers. These may be used alone or in combination. Of the above-described materials of the inorganic fibers, silica-alumina is desirable.

The organic binder is not limited in particular, and is, for example, one or more selected from polyvinyl alcohol, methylcellulose, ethylcellulose, carboxymethylcellulose and the like. Of the organic binders, carboxymethylcellulose is desirable.

The thickness of the adhesive layer 250 is preferably in the range of 0.3 mm to 2 mm. If the thickness of the adhesive layer 250 is less than 0.3 mm, the joining strength of honeycomb units is not sufficient. If the thickness of the adhesive layer 250 exceeds 2 mm, there is the problem of an increase in the pressure loss of the honeycomb structure. The number of honeycomb units to be joined is suitably determined in accordance with the size of the honeycomb structure.

### [Honeycomb Structure]

A honeycomb structure according to the present invention may have any shape. For example, in addition to a circular-pillar shape illustrated in FIG. 1 and FIG. 3, the honeycomb structure may also have a cylindroid shape, a square pillar shape, a polygonal pillar shape and the like.

### [Method of Manufacturing Honeycomb Structure]

Next, a description is given of a method of manufacturing a honeycomb structure according to the present invention. The following description is given, taking the case of manufacturing the honeycomb structure 100 illustrated in FIG. 1 as an example. However, the honeycomb structure 200 illustrated in FIG. 3 may also be manufactured using the same method.

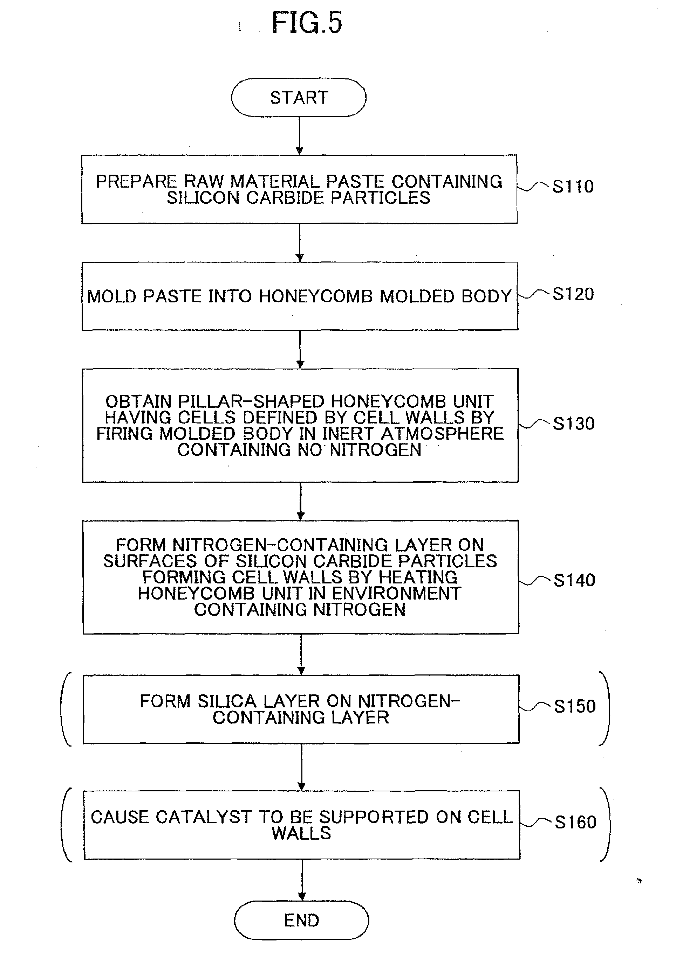

Fig. 5 schematically illustrates a flow of a method of manufacturing a honeycomb structure according to the present invention. The method of manufacturing a honeycomb structure according to the present invention includes:
(a) the step of preparing paste containing silicon carbide particles (step S110);
(b) the step of forming a honeycomb molded body by molding the paste (step S120);
(c) the step of obtaining a pillar-shaped honeycomb unit having cells defined by cell walls by firing the molded body in an inert atmosphere containing no nitrogen (step S130);
(d) the step of forming a nitrogen-containing layer on the surfaces of the silicon carbide particles forming the cell walls by heating the honeycomb unit in an environment containing nitrogen (step S140);
(e) the step of forming a silica layer on the nitrogen-containing layer (step 3150); and
(f) the step of causing a catalyst to be supported on the cell walls (step S160).

Step S150 of (e) and/or step S160 of (f) may be omitted.

Further, the method of manufacturing a honeycomb structure according to the present invention may have the step of joining multiple honeycomb units by interposing an adhesive layer.

A description is given below of each of the steps.

### [Step S110]

First, raw material paste having silicon carbide (SiC) as a principal component is prepared.

Apart from silicon carbide (SiC) particles, an organic binder, a dispersion medium, a molding aid (for example, molding lubricant, molding plasticizer or the like) and the like may be suitably added to the raw material paste.

The organic binder is not limited in particular, and may be one or more kinds of organic binders selected from, for example, methylcellulose, carboxymethylcellulose, hydroxyethylcellulose, polyethylene glycol, phenolic resin, epoxy resin and the like. The amount of the organic binder blended is preferably 1 part by weight to 10 parts by weight to the total of 100 parts by weight of the inorganic particles.

The dispersion medium is not limited in particular, and may be, for example, water, an organic solvent (such as benzene), alcohol (such as methanol) or the like.

The molding aid is not limited in particular, and may be, for example, ethylene glycol, dextrin, a fatty acid, fatty acid soap, polyalcohol or the like, where two or more kinds of molding aids may be blended. Of these molding aids, a fatty acid is desirable. Further, the fatty acid is preferably an unsaturated fatty acid, and more desirably a higher fatty acid. The higher fatty acid desirably has a carbon number more than or equal to 15 and less than 65.

The raw material paste is not limited to this, and is preferably subjected to mixing and kneading. For example, the raw material paste may be mixed using a mixer, an attritor or the like, and may be well kneaded with a kneader or the like.

### [Step S120]

Next, a honeycomb molded body is formed by molding the raw material paste prepared in step S110.

The method of molding a honeycomb molded body is not limited in particular. For example, a honeycomb molded body having multiple cells is molded from the raw material paste by extrusion molding or the like.

Thereafter, the obtained honeycomb molded body is preferably dried. The drying apparatus used for drying is not limited in particular, and may be a microwave drying apparatus, a hot air drying apparatus, a dielectric drying apparatus, a reduced-pressure drying apparatus, a vacuum drying apparatus, a freeze drying apparatus or the like. Further, the obtained dried honeycomb molded body is preferably degreased. The conditions for degreasing, which are not limited in particular and are suitably selected in accordance with the kind and amount of the organic matter included in the molded body, are preferably 400 °C and 2 hours in the rough.

### [Step S130]

Next, the obtained dried honeycomb molded body is fired (first heat treatment). Firing is performed for 1 hour to 5 hours at 2000 °C to 2200 °C.

The atmosphere for firing needs to be an inert atmosphere containing no nitrogen, such as an argon atmosphere or the like. This is because if firing is performed in an environment containing nitrogen, a nitrogen component in the environment is captured through gas phase diffusion into sintered silicon carbide particles during the sintering of the silicon carbide particles, which makes it difficult to cause nitrogen to be present only on the surfaces of silicon carbide particles forming cell walls in a honeycomb unit to be finally obtained.

### [Step S140]

Next, in order to form a nitrogen-containing layer on the surfaces of the silicon carbide particles, the honeycomb fired body obtained in step S130 is subjected to heat treatment (second heat treatment).

This second heat treatment is performed in an environment containing nitrogen. The second heat treatment is performed in the temperature range of 1800 °C to 2200 °C, and more preferably, in the range of 1800 °C to 2000 °C. The second heat treatment is performed for 2 hours to 8 hours.

If the temperature of the second heat treatment is less than 1800 °C, nitrogen atoms (N) are prevented from diffusing onto the surfaces of the silicon carbide particles, so that formation of a nitrogen-containing layer is prevented. If the temperature of the second heat treatment exceeds 2200 °C, the sintering of the silicon carbide particles progresses. Therefore, nitrogen atoms (N) diffuse into sintered silicon carbide particles through gas phase diffusion, so that nitrogen atoms (N) are prevented from being present only on the surfaces of the silicon carbide particles.

Through the above-described processes, it is possible to obtain a honeycomb unit having a nitrogen-containing layer on the surfaces of silicon carbide particles.

### [Step S150]

Next, if needed, a silica layer is further formed on the surfaces of the silicon carbide particles of the honeycomb unit obtained in step S140.

The method of forming a silica layer is not limited in particular. The silica layer may be formed by, for example, covering the surface of the nitrogen-containing layer with silicon by adding metal Si (silicon) particles to the surface of the honeycomb unit and oxidizing the metal Si (silicon) by heating the honeycomb unit.

The method of adding metal Si (silicon) particles to the surface of the honeycomb unit is, for example, immersing the honeycomb unit in molten silicon, or the like. Further, the method of oxidizing metal Si (silicon) particles added to the surfaces of the silicon carbide particles of the honeycomb unit is, for example, subjecting the honeycomb unit to heat treatment in an oxidizing atmosphere, or the like. In this case, the temperature of heat treatment is preferably in the range of 1000 °C to 1400 °C, and the time of heat treatment is preferably in the range of 1 hour to 10 hours.

If the temperature of heat treatment is less than 1000 °C, the metal Si (silicon) particles are prevented from being sufficiently oxidized, so that a silica layer is prevented from being formed on the surfaces of the silicon carbide particles. On the other hand, if the temperature of heat treatment exceeds 1400 °C, the metal Si (silicon) particles melt, so that a silica layer is prevented from being formed on the surfaces of the silicon carbide particles.

Through the above-described process, it is possible to manufacture a honeycomb unit having a silica layer further formed on the nitrogen-containing layer.

### [Other Steps]

### [Providing Electrodes]

In the case of using the honeycomb unit as a honeycomb structure of a resistance heating type, the honeycomb unit is provided with a pair of electrodes. This process is preferably performed before the above-described step (e) (step S150) after the above-described step (d) (step S140). Alternatively, this process may be performed after cutting the silica layer where the electrodes are to be provided after the above-described step (e) (step S150).

The positions where electrodes are provided are not limited in particular. The electrodes are preferably provided one on each end portion of the honeycomb unit entirely around the end portion or at least on the curved side so as to facilitate attachment of terminals and supply of electric current.

The electrodes are formed of metal or the like. Further, the electrodes may be provided by, for example, metal spraying, metal sputtering, metal vapor deposition or the like.

### [Support of Catalyst]

In the method of manufacturing a honeycomb structure of the present invention, the step of causing a catalyst to be supported on the cell walls of the honeycomb unit may be further performed after the above-described step (d) (step S140) or the above-described step (e) (step S150).

In particular, in the case of using the honeycomb unit as a honeycomb structure for a catalyst support, a catalyst is supported on the cell walls of the honeycomb unit.

For example, platinum, rhodium, palladium or the like may be used as the catalyst. The method of causing a catalyst to be supported is not limited in particular. The catalyst may be supported by interposing an alumina layer.

### [Case of Honeycomb Structure of Aggregated Structure]

The method of manufacturing a honeycomb structure of the present invention may have the step of joining multiple honeycomb units by interposing an adhesive layer (joining process).

For example, in the case of manufacturing a honeycomb structure of the aggregated structure, multiple honeycomb units obtained with the above-described method are joined by interposing an adhesive layer.

This joining process is performed after the above-described step (d) (step S140). In particular, considering the heat resistance of the inorganic fibers contained in the adhesive layer, the joining process is performed after the above-described step (e) (step S150) if the method of manufacturing a honeycomb structure of the present invention includes the above-described step (e) (step S150) (silica layer forming process). Further, if the method of manufacturing a honeycomb structure of the present invention includes the above-described step (f) (step S160) (catalyst supporting process), the joining process is performed before the above-described step (f) (step S160). Further, if the method of manufacturing a honeycomb structure of the present invention includes the above-described step (e) (step S150) (silica layer forming process) and the above-described step (f) (step S160) (catalyst supporting process), the joining process is performed between the above-described step (e) (step S150) and the above-described step (f) (step S160).

### [Examples]

Next, a description is given of examples according to the present invention.

### [Example 1]

A honeycomb unit was manufactured in the following manner, and a change in the electrical resistivity of the honeycomb unit due to temperature was evaluated.

First, raw material paste for molding a honeycomb unit was prepared. The raw material paste was prepared by mixing 690 g of an organic binder (methylcellulose), 115 g of a molding lubricant (UNILUB), 115 g of a molding plasticizer (glycerin), and 1600 g of ion-exchanged water with 1000 g of silicon carbide particles.

Next, the obtained raw material paste was subjected to extrusion molding using a screw molding machine, thereby manufacturing a honeycomb molded body of 10 mm square and 50 mm long. The cell walls of the honeycomb molded body were 0.2 mm in thickness, and the cell density of the honeycomb molded body was 600 cpsi.

Next, the obtained honeycomb molded body was fired at 2200 °C for 3 hours in an argon atmosphere, so that a honeycomb fired body was obtained (first heat treatment). The obtained honeycomb fired body (also referred to as honeycomb unit) has an average porosity of 45% and an average pore size of 11 µm.

Next, this honeycomb fired body was subjected to heat treatment at 1900 °C for 8 hours in a nitrogen atmosphere (second heat treatment).

The honeycomb unit thus obtained is referred to as honeycomb unit according to Example 1."

The surfaces of silicon carbide particles contained in the cell walls of the honeycomb unit according to Example 1 were observed by SNDM.

Specifically, silicon carbide particles were observed with a voltage of 4 V applied to a probe, and such an image as to allow determination of the variation of carrier concentration was captured.

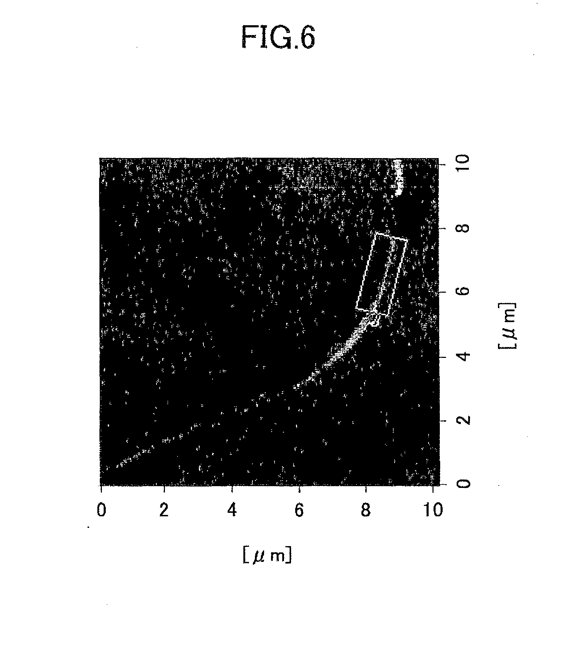

FIG. 6 is a result (photograph) of an SNDM observation of the honeycomb unit according to Example 1. FIG. 6 shows that a nitrogen-containing layer is formed on the surface (a white portion in the photograph) of a silicon carbide particle of Example 1. Further, one part of the surface of the silicon carbide particle in the photograph of FIG. 6 (the frame part in FIG. 6) was selected, and a line analysis was conducted from inside to the surface of the silicon carbide particle.

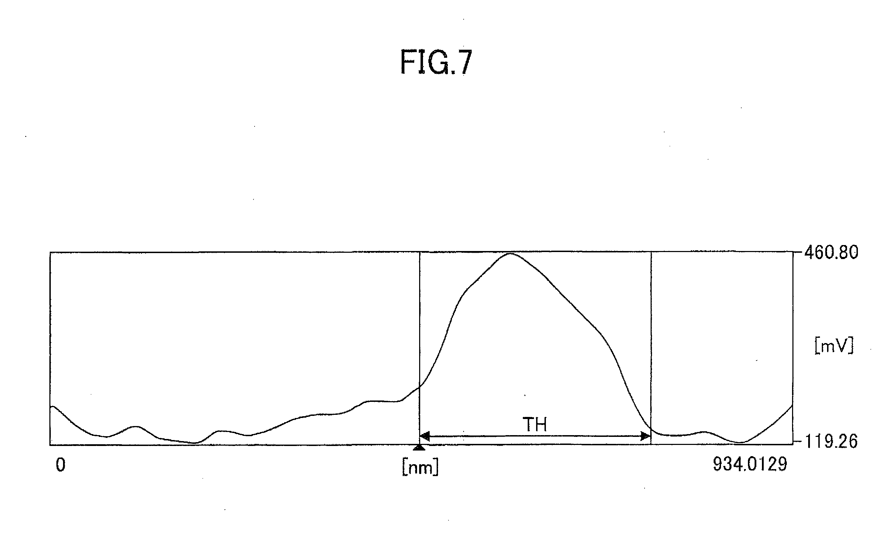

FIG. 7 is a chart illustrating the result of the line analysis of a partial surface of the silicon carbide particle in the honeycomb unit according to Example 1. In FIG. 7, the range where there is an increase in carrier concentration is determined as the thickness of the nitrogen-containing layer. In order to closely identify the range where there is an increase in carrier concentration, the interval between points where the second-order differential coefficient of the carrier concentration curve becomes zero is defined as the thickness of the nitrogen--containing layer (indicated by double--headed arrow TH in FIG. 7).

As a result of the measurement, the thickness of the nitrogen-containing layer was 300 nm.

### [Example 2]

A honeycomb unit according to Example 2 was manufactured in the same manner as in Example 1. In Example 2, however, the honeycomb unit obtained in Example 1 (hereinafter referred to as "honeycomb unit having a nitrogen-containing layer") was further subjected to the following treatment, so that a silica layer was formed on the surfaces of the silicon carbide particles.

First, the entire "honeycomb unit having a nitrogen-containing layer" was immersed in a bath of aqueous liquid containing metal Si (silicon) particles, so that the metal Si (silicon) particles were added to the surfaces of the silicon carbide particles.

Next, this "honeycomb unit having a nitrogen-containing layer" was dried and was thereafter heated at 1200 °C for 1 hour in the atmosphere.

As a result, a silica layer was formed on the surfaces of the silicon carbide particles (technically, the surface of the nitrogen-containing layer). The silica layer was 500 nm in thickness. The thickness of the nitrogen-containing layer hardly changed through this heat treatment, and was 300 nm.

The thickness of the silica layer was measured with a transmission electron microscope.

### [Comparative Example]

A honeycomb unit according to Comparative Example 1 was manufactured in the same manner as in Example 1. In Comparative Example 1, however, the "first heat treatment" was performed at 2200 °C for 3 hours in a nitrogen atmosphere. Further, the "second heat treatment" was not performed in Comparative Example 1.

The surfaces of silicon carbide particles contained in the cell walls of the honeycomb unit according to Comparative Example 1 were observed by SNDM. As a result, no nitrogen-containing layer was formed on the surfaces of the silicon carbide particles.

The configurations (the presence or absence of a nitrogen-containing layer and the presence or absence of a silica layer) of the honeycomb units according to Example 1, Example 2, and Comparative Example 1 are collectively illustrated in Table 1.

**Table 1**

| | NITROGEN-CONTAINING LAYER | SILICA LAYER | EVALUATION OF TEMPERATURE DEPENDENCE OF ELECTRICAL RESISTIVITY | EVALUATION OF CHANGE IN ELECTRICAL RESISTIVITY OVER TIME IN ACCELERATED ENVIRONMENT |
|---|---|---|---|---|
| EXAMPLE 1 | YES (300nm) | NO | LOW TEMPERATURE DEPENDENCE | SHARP CHANGE |
| EXAMPLE 2 | YES (300nm) | YES (500nm) | LOW TEMPERATURE DEPENDENCE | NO SUBSTANTIAL CHANGE |
| COMPARATIVE EXAMPLE 1 | NO | NO | HIGH TEMPERATURE DEPENDENCE | - |

### [Evaluation]

The following evaluation of a change in electrical resistivity due to temperature was performed using the honeycomb units of Example 1, Example 2, and Comparative Example 1 manufactured in the above-described manner.

### [Evaluation of Changes in Electrical Resistivity due to Temperature]

A change in the electrical resistivity of each honeycomb unit due to temperature was measured. The measurement was performed through the following steps.

First, silver paste was applied entirely around each end portion (10 mm in width) of each of the honeycomb units of Example 1 and Comparative Example 1 as electrodes. Further, a platinum line was connected to each of the electrodes.

On the other hand, the silica layer was cut off entirely around each end portion (10 mm in width) of the honeycomb unit of Example 2 using sandpaper, and thereafter, silver paste was applied as electrodes to where the silica layer had been cut off. Further, in Example 2 as well, a platinum line was connected to each of the electrodes the same as in Example 1 and Comparative Example 1.

As described above, samples for evaluating a change in electrical resistivity due to temperature with respect to Example 1, Example 2, and Comparative Example 1 (hereinafter referred to as evaluation samples) were manufactured.

Next, a constant-voltage power supply unit was connected between the electrodes of each of the evaluation samples, and a voltage of 200 V was applied between the electrodes. In this state, the electrical resistivities of the evaluation samples were measured. Thereafter, the evaluation samples were heated to temperatures (up to 550 °C), and the electrical resistivities of the evaluation samples were measured in the same manner.

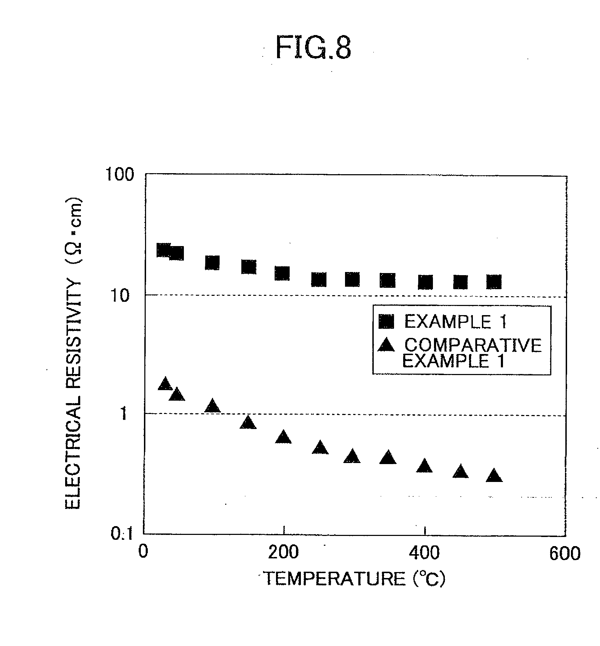

The measurement results of the evaluation samples of the honeycomb unit according to Example 1 and the honeycomb unit according to Comparative Example 1 are collectively illustrated in FIG. 8.

FIG. 8 is a graph illustrating changes in the electrical resistivities of the honeycomb units according to Example 1 and Comparative Example 1 due to temperature.

This graph of FIG. 8 shows that the electrical resistivity of the honeycomb unit according to Comparative Example 1 tends to drop sharply from an electrical resistivity of 1.8 Ω·cm at 25 °C to an electrical resistivity of 0.3 Ω·cm at 500 °C with an increase in temperature (from 25 °C to 500 °C). On the other hand, in the honeycomb unit according to Example 1, the temperature dependence of the electrical resistivity is controlled, and in the temperature range of room temperature (25 °C) to 550 °C, the electrical resistivity is 32.8 Ω·cm at 25 °C and 11.2 Ω·cm at 500 °C, thus showing that a decrease in electrical resistivity is controlled.

Thus, it has been confirmed that the temperature dependence of electrical resistivity is significantly controlled in the honeycomb unit manufactured with the method of manufacturing a honeycomb structure according to the present invention.

In Table 1 described above, the results (the results of the evaluation of a change in electrical resistivity due to temperature) obtained in the honeycomb units according to Example 1, Example 2, and Comparative Example 1 are collectively illustrated.

### [Evaluation of Changes in Electrical Resistivity in Accelerated Environment]

Next, changes in electrical resistivity over time in an environment closer to actual installation in vehicles were measured using the honeycomb units according to Example 1 and Example 2. In the case of the honeycomb unit according to Comparative Example 1, it was confirmed in "Evaluation of Changes in Electrical Resistivity due to Temperature" described above that the electrical resistivity presents high temperature dependence. Therefore, this evaluation was not performed with respect to the honeycomb unit according to Comparative Example 1. Further, the electrical resistivity was measured using evaluation samples the same as in the case of "Evaluation of Changes in Electrical Resistivity due to Temperature" described above.

The measurement was performed at 1000 °C in the atmosphere, and the electrical resistivity was measured for up to 100 hours.

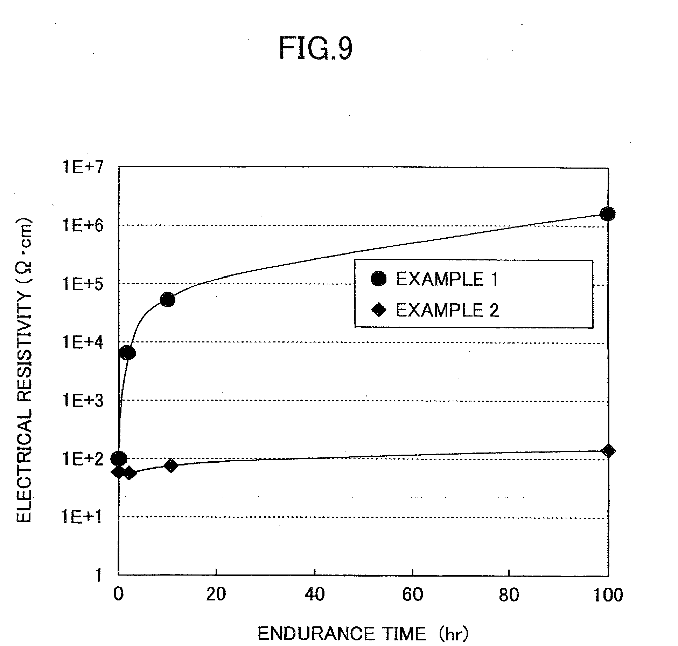

The results of the evaluation of changes in electrical resistivity in an accelerated environment are illustrated in FIG. 9.

FIG. 9 is a graph illustrating changes in electrical resistivity over time at 1000 °C in the atmosphere in the honeycomb units according to Example 1 and Example 2.

The results of the evaluation of changes in electrical resistivity in an accelerated environment are illustrated in Table 1.

As illustrated in the graph of FIG. 9, in the honeycomb unit according to Example 1, the electrical resistivity increased sharply from 125 Ω·cm to 31200 Ω·cm in 10 hours. On the other hand, it has been found that in the honeycomb unit according to Example 2, the electrical resistivity hardly changes up to at least 100 hours later. This suggests that in the case of forming a silica layer on the nitrogen-containing layer, the silica layer serves as a protection layer to improve the oxidation resistance of the nitrogen-containing layer.

Accordingly, in the case of using a honeycomb structure for a long period of time at high temperatures, the durability of the nitrogen-containing layer is believed to be further improved by further forming a silica layer on the nitrogen-containing layer. Further, this makes it possible to control the temperature dependence of electrical resistivity over a long period of time.

The electrical resistivity of Example 1 in the accelerated environment presents a sharp change. The accelerated environment implemented in this test has severe conditions of high temperature and high oxygen concentration compared with those of a practical usage environment. Therefore, even the configuration of Example 1 is sufficiently usable for practical applications.

Further, the evaluation of changes in electrical resistivity due to temperature and the evaluation of changes in electrical resistivity in an accelerated environment were performed using evaluation samples. It is believed, however, that the same results are obtained as well with evaluations using honeycomb structures according to the present invention.

## Claims

1. A honeycomb structure including a pillar-shaped honeycomb unit having a plurality of cells defined by cell walls, wherein
the cell walls contain silicon carbide particles, and
a nitrogen-containing layer having a thickness in a range of 100 nm to 600 nm is formed on surfaces of the silicon carbide particles, and wherein,
the honeycomb unit is obtained by:
preparing raw material paste having silicon carbide as a principal component; mixing and kneading the raw material paste; and forming a honeycomb molded body having the plurality of cells by molding the mixed and kneaded raw material paste by extrusion molding;
obtaining a honeycomb fired body by firing the honeycomb molded body for 1 hour to 5 hours at 2000°C to 2200°C in an inert atmosphere containing no nitrogen; and
heating the honeycomb fired body for 2 hours to 8 hours at a temperature in a range of 1800°C to 2200°C in an environment containing nitrogen.

2. The honeycomb structure as claimed in claim 1, **characterized in that** a silica layer is formed on a surface of the nitrogen-containing layer.

3. The honeycomb structure as claimed in claim 2, **characterized in that** the silica layer has a thickness in a range of 100 nm to 800 nm.

4. The honeycomb structure as claimed in any of claims 1 to 3, **characterized in that** a catalyst is supported on the cell walls.

5. The honeycomb structure as claimed in claim 4, **characterized in that**:
the catalyst is one of platinum, rhodium, and palladium, and
the catalyst is supported on the cell walls by interposing an alumina layer.

6. The honeycomb structure as claimed in any of claims 1 to 5, **characterized in that** the honeycomb structure has a plurality of the honeycomb units joined by interposing an adhesive layer.

7. A method of manufacturing a honeycomb structure, comprising the steps of:
(a) preparing raw material paste containing silicon carbide particles;
(b) forming a honeycomb molded body having a plurality of cells by mixing and kneading the raw material paste and molding the mixed and kneaded raw material paste by extrusion molding;
(c) obtaining a pillar-shaped honeycomb unit having the plurality of cells defined by cell walls by firing the honeycomb molded body for 1 hour to 5 hours at 2000°C to 2200°C in an inert atmosphere containing no nitrogen; and
(d) forming a nitrogen-containing layer having a thickness in a range of 100 nm to 600 nm on surfaces of the silicon carbide particles forming the cell walls by heating the honeycomb unit for 2 hours to 8 hours at a temperature in a range of 1800°C to 2200°C in an environment containing nitrogen.

8. The method of manufacturing a honeycomb structure as claimed in claim 7, further **characterized by** the step of:
(e) forming a silica layer on a surface of the nitrogen-containing layer after said step (d).

9. The method of manufacturing a honeycomb structure as claimed in claim 8, **characterized in that** said step (e) includes subjecting the honeycomb unit to heat treatment at a temperature of 1000°C to 1400°C in an atmosphere containing oxygen after coating the surface of the nitrogen-containing layer with silicon.

10. The method of manufacturing a honeycomb structure as claimed in claim 8 or 9, **characterized in that** the silica layer has a thickness in a range of 100 nm to 800 nm.

11. The method of manufacturing a honeycomb structure as claimed in claim 7, further **characterized by** the step of:
(f) causing a catalyst to be supported on the cell walls after said step (d).

12. The method of manufacturing a honeycomb structure as claimed in any of claims 8 to 10, further **characterized by** the step of:
(f) causing a catalyst to be supported on the cell walls after said steps (d) and (e).

13. The method of manufacturing a honeycomb structure as claimed in any of claims 7 to 12, further **characterized by** the step of:
joining a plurality of the honeycomb units by interposing an adhesive layer.

## Patentansprüche

1. Wabenstruktur mit einer säulenförmigen Wabeneinheit, die eine Vielzahl von durch Zellenwände definierte Zellen aufweist, bei der
die Zellenwände Siliziumkarbidpartikel enthalten, und eine Stickstoff enthaltende Lage mit einer Dicke in einem Bereich von 100nm bis 600nm an Flächen der Siliziumkarbidpartikel ausgebildet ist, und bei der
die Wabeneinheit erhalten wird durch:
Bereitstellen einer Rohmaterialpaste mit Siliziumkarbid als einer Hauptkomponente, Mischen und Kneten der Rohmaterialpaste, und Ausbilden eines Wabenformkörpers mit der Vielzahl der Zellen durch Formen der gemischten und gekneteten Rohmaterialpaste durch Extrusionsformen,
Erhalten eines gebrannten Waben-Körpers durch Brennen des Wabenformkörpers für 1 Stunde bis 5 Stunden bei 2000°C bis 2200°C in einer in Schutzgasatmosphäre, die keinen Stickstoff enthält, und
Erwärmen des gebrannten Waben-Körpers für 2 Stunden bis 8 Stunden bei einer Temperatur in einem Bereich vom 1800°C bis 2200°C in einer Stickstoff enthaltenden Umgebung.

2. Wabenstruktur gemäß Anspruch 1, **dadurch gekennzeichnet, dass** eine Siliziumlage an einer Fläche der Stickstoff enthaltenden Lage ausgebildet ist.

3. Wabenstruktur gemäß Anspruch 2, **dadurch gekennzeichnet, dass** die Siliziumlage eine Dicke in einem Bereich vom 100nm bis 800nm aufweist.

4. Wabenstruktur gemäß einem der Ansprüche 1 bis 3, **dadurch gekennzeichnet, dass** ein Katalysator an den Zellenwänden getragen wird.

5. Wabenstruktur gemäß Anspruch 4, **dadurch gekennzeichnet, dass**
der Katalysator ausgewählt ist aus Platin, Rhodium, und Palladium, und
der Katalysator durch Zwischenfügen einer Aluminiumlage an den Zellenwänden getragen wird.

6. Wabenstruktur gemäß einem der Ansprüche 1 bis 5, **dadurch gekennzeichnet, dass** die Wabenstruktur eine Vielzahl von Wabeneinheiten aufweist, die durch Zwischenfügen einer Haftmittellage verbunden sind.

7. Verfahren zum Herstellen einer Wabenstruktur, umfassend die Schritte:
(a) Bereitstellen einer Rohmaterialpaste, die Siliziumkarbidpartikel enthält,
(b) Ausbilden eines Wabenformkörpers mit einer Vielzahl von Zellen durch Mischen und Kneten der Rohmaterialpaste und Formen der gemischten und gekneteten Rohmaterialpaste durch Extrusionsformen
(c) Erhalten einer säulenförmigen Wabeneinheit mit der Vielzahl der durch Zellenwände definierten Zellen, indem der Wabenformkörper für eine 1 Stunde bis 5 Stunden bei 2000°C bis 2200°C in einer keinen Stickstoff enthaltenden Schutzgasatmosphäre gebrannt wird, und
(d) Ausbilden einer Stickstoff enthaltenden Lage mit einer Dicke in einem Bereich vom 100nm bis 600nm an Flächen der Siliziumkarbidpartikel, die die Zellenwände ausbilden, durch Erwärmen der Wabeneinheit für 2 Stunden bis 8 Stunden bei einer Temperatur in einem Bereich von 1800°C Bis 2200°C in einer Stickstoff enthaltenden Umgebung.

8. Verfahren zum Herstellen einer Wabenstruktur gemäß Anspruch 7, ferner **gekennzeichnet durch** den Schritt:
(e) Ausbilden einer Siliziumlage an einer Fläche der Stickstoff enthaltenden Lage nach dem Schritt (d).

9. Verfahren zum Herstellen einer Wabenstruktur gemäß Anspruch 8, **dadurch gekennzeichnet, dass** der Schritt (e) aufweist: Wärmebehandeln der Wabeneinheit bei einer Temperatur von 1000°C bis 1400°C in einer Sauerstoff enthaltenden Atmosphäre nach einem Beschichten der Fläche der Stickstoff enthaltenden Lage mit Silizium.

10. Verfahren zum Herstellen einer Wabenstruktur gemäß Anspruch 8 oder 9, **dadurch gekennzeichnet, dass** die Siliziumlage eine Dicke in einem Bereich vom 100nm bis 800nm aufweist.

11. Verfahren zum Herstellen einer Wabenstruktur gemäß Anspruch 7, ferner **gekennzeichnet durch** den Schritt:
(f) Tragenlassen eines Katalysators an den Zellenwänden nach dem Schritt (d)

12. Verfahren zum Herstellen einer Wabenstruktur gemäß einem der Anspruch 8 bis 10, ferner **gekennzeichnet durch** den Schritt:
(f) Tragenlassen eines Katalysators an den Zellenwänden nach den Schritten (d) und (e).

13. Verfahren zum Herstellen einer Wabenstruktur gemäß einem der Ansprüche 7 bis 12, ferner **gekennzeichnet durch** den Schritt:
Verbinden einer Vielzahl von Wabeneinheiten **durch** Zwischenfügen einer Haftmittellage.

## Revendications

1. Structure en nid d'abeille comportant une unité en nid d'abeille en forme de pilier ayant une pluralité de cellules définies par des parois cellulaires, où
les parois cellulaires contiennent des particules de carbure de silicium, et
une couche contenant de l'azote, avec une épaisseur située dans une plage entre 100 nm et 600 nm, est formée sur des surfaces des particules de carbure de silicium, et où,
l'unité en nid d'abeille est obtenue par :
la préparation d'une pâte de matière première ayant le carbure de silicium comme composant principal ; le mélange et le malaxage de la pâte de matière première ; et la formation d'un corps moulé en nid d'abeille contenant la pluralité de cellules en moulant la pâte de matière première mélangée et malaxée grâce au procédé de moulage par extrusion ;
l'obtention d'un corps cuit en nid d'abeille en cuisant le corps moulé en nid d'abeille pendant 1 à 5 heure(s) à une température comprise entre 2000 °C et 2200 °C dans une atmosphère inerte ne contenant pas d'azote ; et
le chauffage du corps cuit en nid d'abeille pendant 2 à 8 heures à une température située dans une plage entre 1800 °C et 2200 °C dans un environnement contenant de l'azote.

2. Structure en nid d'abeille telle que revendiquée dans la revendication 1, **caractérisée en ce qu'**une couche de silice est formée sur une surface de la couche contenant de l'azote.

3. Structure en nid d'abeille telle que revendiquée dans la revendication 2, **caractérisée en ce que** la couche de silice a une épaisseur située dans une plage entre 100 nm et 800 nm.

4. Structure en nid d'abeille telle que revendiquée dans l'une des revendications 1 à 3, **caractérisée en ce qu'**un catalyseur est supporté sur les parois cellulaires.

5. Structure en nid d'abeille telle que revendiquée dans la revendication 4, **caractérisée en ce que** :
le catalyseur est l'un du platine, du rhodium et du palladium, et
le catalyseur est supporté sur les parois cellulaires en interposant une couche d'alumine.

6. Structure en nid d'abeille telle que revendiquée dans l'une des revendications 1 à 5, **caractérisée en ce que** la structure en nid d'abeille possède une pluralité des unités en nid d'abeille jointes en interposant une couche adhésive.

7. Procédé de fabrication d'une structure en nid d'abeille, comprenant les étapes qui consistent à :
(a) préparer une pâte de matière première contenant des particules de carbure de silicium ;
(b) former un corps moulé en nid d'abeille ayant une pluralité de cellules en mélangeant et malaxant la pâte de matière première et en moulant et la pâte de matière première mélangée et malaxée grâce au procédé de moulage par extrusion ;
(c) obtenir une unité en nid d'abeille en forme de pilier ayant la pluralité de cellules définies par des parois cellulaires en cuisant le corps moulé en nid d'abeille pendant 1 à 5 heure(s) à une température comprise entre 2000 °C et 2200 °C dans une atmosphère inerte ne contenant pas d'azote ; et
(d) former une couche contenant de l'azote ayant une épaisseur située dans une plage entre 100 nm et 600 nm sur des surfaces des particules de carbure de silicium formant les parois cellulaires en chauffant l'unité en nid d'abeille pendant 2 à 8 heures à une température située dans une plage entre 1800 °C et 2200 °C dans un environnement contenant de l'azote.

8. Procédé de fabrication d'une structure en nid d'abeille tel que revendiqué dans la revendication 7, **caractérisé en outre par** l'étape qui consiste à :
(e) former une couche de silice sur une surface de couche contenant de l'azote après ladite étape (d).

9. Procédé de fabrication d'une structure en nid d'abeille tel que revendiqué dans la revendication 8, **caractérisé en ce que** ladite étape (e) inclut le fait de soumettre l'unité en nid d'abeille à un traitement thermique à une température comprise entre 1000 °C et 1400 °C dans une atmosphère contenant de l'oxygène après enduction de la surface de la couche contenant de l'azote avec du silicium.

10. Procédé de fabrication d'une structure en nid d'abeille tel que revendiqué dans la revendication 8 ou 9, **caractérisé en ce que** la couche de silice a une épaisseur située dans une plage entre 100 nm et 800 nm.

11. Procédé de fabrication d'une structure en nid d'abeille tel que revendiqué dans la revendication 7, **caractérisé en outre par** l'étape qui consiste à :
(f) amener un catalyseur à être supporté sur les parois cellulaires après ladite étape (d).

12. Procédé de fabrication d'une structure en nid d'abeille tel que revendiqué dans l'une des revendications 8 à 10, **caractérisé en outre par** l'étape qui consiste à :
(f) amener un catalyseur à être supporté sur les parois cellulaires après lesdites étapes (d) et (e).

13. Procédé de fabrication d'une structure en nid d'abeille tel que revendiqué dans l'une des revendications 7 à 12, **caractérisé en outre par** l'étape qui consiste à :
joindre une pluralité des unités de nid d'abeille en interposant une couche adhésive.
